# EUROPÄISCHE PATENTSCHRIFT

(11) **EP 0 368 835 B1**
(45) Veröffentlichungstag und Bekanntmachung des Hinweises auf die Patenterteilung: **09.03.1994**
(21) Anmeldenummer: 89890270.5
(22) Anmeldetag: 16.10.1989
(51) Int. Cl.: C21B 11/00

(54) **Verfahren zur Herstellung von flüssigem Roheisen sowie Anlage zur Durchführung des Verfahrens**
Process for the production of molten pig iron and plant for carrying out the process
Procédé pour la production de la fonte liquide et installation pour la mise en oeuvre de ce procédé

(30) Priorität: 25.10.1988 AT 2642/88
(43) Veröffentlichungstag der Anmeldung: 16.05.1990
(73) Patentinhaber: DEUTSCHE VOEST-ALPINE INDUSTRIEANLAGENBAU GMBH, 40094 Düsseldorf (DE)
(72) Erfinder: Kepplinger, Werner, Dipl.-Ing. Dr., Hart A-4020 Linz (AT)
(74) Vertreter: Wolfram, Gustav, Dipl.-Ing.

(56) Entgegenhaltungen:
- EP-A- 0 316 819
- DE-B- 1 086 256
- FR-A- 1 153 768
- PATENT ABSTRACTS OF JAPAN, Band 13, Nr. 42 (C-564)[3390], 30. Januar 1989;& JP-A-63 241 125 (NIPPON STEEL CORP.)

## Beschreibung

Die Erfindung betrifft ein Verfahren zur Herstellung von flüssigem Roheisen durch Schmelzreduktion von Eisenerzen unterschiedlicher Korngrößen, die eine Fraktion A mit Korngrößen, denen Durchmesser von weniger als 0,2 mm entsprechen, enthalten, wobei das Erz mit Reduktionsgas vorreduziert, das vorreduzierte Material fertigreduziert und in einem Einschmelzvergaser zu flüssigem Roheisen erschmolzen wird, sowie eine Anlage zur Durchführung des Verfahrens.

Verfahren zur Verarbeitung von körnigen Erzen mit einem Korndurchmesser von weniger als 0,1 mm sind bekannt (siehe z.B. World Steel and Metalworking, Vol. 6, 84/85, Seite 19). Feinerze mit einem Teilchendurchmesser von weniger als 0,5 mm können in einer zirkulierenden Wirbelschicht reduziert werden, wie z.B. in der DE-A - 25 21 038 beschrieben wird. Alle diese Verfahren eignen sich aber nicht zur Verarbeitung von Eisenerzen mit einem breiten Kornband, wie sie z.B. Feinerze in ungesiebter Form, oder Feinerze, die aus einer Erzgrobfraktion abgesiebt wurden, darstellen. Derartige Erze können nicht ohne vorherige Aufbereitung im Kochofen oder nach anderen Schmelzreduktionsverfahren großtechnisch zu Roheisen verarbeitet werden. Dies gilt insbesondere für Feinerze, die einen Staubanteil enthalten, wobei darunter Erzpartikel verstanden werden, die einen Durchmesser von weniger als 0,2 mm aufweisen (Fraktion A). Derartige Erze müssen vor ihrer Verhüttung vorgemahlen und zu einer einheitlichen Korngröße agglomeriert werden.

Ein Verfahren und eine Anlage zur Schmelzreduktion von Feinerz ist aus der DE-C - 35 35 572 bekannt, nach der das Erz nach Durchlaufen von zwei nicht näher beschriebenen Vorreduktionsaggregaten dem Einschmelzvergaser in Höhe der Sauerstoff-Einblasebene zugeführt wird. Diese Anlage eignet sich jedoch nicht zur Verarbeitung von Feinerzen, die ein breites Korngrößenband aufweisen, da während der Chargierung in das erste Vorreduktionsaggregat zumindest die staubförmigen Erzanteile vom entgegenströmenden Reduktionsgas mitgerissen und wieder ausgetragen werden. Eine Rückführung dieses Anteiles ist nach der DE-C - 35 35 572 nicht vorgesehen.

Ein weiterer Nachteil des genannten Verfahrens besteht noch darin, daß das Feinerz in vorreduziertem Zustand dem Einschmelzvergaser nahe der Schmelzzone zugeführt wird und daher ein zusätzlicher Wärmebedarf entsteht, der mittels Plasmabrenner abgedeckt werden muß.

Ein weiteres Verfahren zur Schmelzreduktion von Feinerzen ist in der Zeitschrift "The Tex Report" (Vol. 19, No. 4, 418, Seiten 5 bis 9, 1987) beschrieben, wonach die Vorreduktion von Feinerz im Fließbett eines Vorreduktionsreaktors erfolgt, der dem Einschmelzvergaser beigeordnet ist. Aber auch gemäß diesem Verfahren erfolgt die Nachreduktion erst im Einschmelzvergaser, wodurch es zu einem hohen Energieverbrauch und damit zu einer Temperatursenkung kommt. Das Problem der Verarbeitung des staubförmigen Anteiles, der zwangläufig mit dem Reduktionsgas mitgerissen und aus dem Vorreduktionsreaktor ausgetragen wird, ist auch hier nicht gelöst.

Die vorliegende Erfindung setzt sich zum Ziel, diese Nachteile bei der Verarbeitung von Eisenerzen unterschiedlicher Korngrößen, insbesondere mit einem Staubanteil (Fraktion A), zu beseitigen und ein Verfahren und eine Anlage zur Verfügung zu stellen, mit denen Erze eines breiten Korngrößenspektrums ohne Vormahlung und Agglomerierung nach dem Schmelzreduktionsverfahren in einem Einschmelzvergaser zu flüssigem Roheisen erschmolzen werden können.

Dieses Ziel wird erfindungsgemäß dadurch gelöst, daß die vorreduzierte Erzfraktion A durch Windsichten mit dem Reduktionsgas von einer Fraktion B, die aus Teilchen höherer Korngröße besteht, abgetrennt wird, beide Fraktionen A und B getrennt fertigreduziert und der Einschmelzzone des Einschmelzvergasers zugeführt werden.

Vorteilhaft erfolgt die Fertigreduktion der Fraktion A in einem Reduktionszyklon, in den das mit der vorreduzierten Fraktion A beladene Reduktionsgas geleitet wird. Bedingt durch den kleinen Durchmesser der Erzteilchen der Fraktion A genügt zur Fertigreduktion jene kurze Zeitspanne, die üblicherweise zum Abscheiden eines Feststoffes in einem Zyklon benötigt wird.

Die verbleibende Fraktion B wird während der Abtrennung der Fraktion A ebenfalls vom Reduktionsgas bis zu einem gewissen Grad vorreduziert, wobei der Grad der Vorreduktion naturgemäß umso geringer ist, je größer die Erzteilchen sind. Vorreduzierte Erzteilchen mit einem Durchmesser von unter 2 mm können auf einfache Weise dadurch fertigreduziert werden, daß sie unter Schwerkrafteinwirkung durch ein von Reduktionsgas durchströmtes Fließbett geleitet und fertigreduziert werden. Erzteilchen dieser Größe weisen nach dieser Behandlung praktisch den gleichen hohen Metallisierungsgrad auf wie die Fraktion A nach Abscheiden im Reduktionszyklon, weil sie im Fließbett vergleichsweise länger mit dem Reduktionsgas in Kontakt sind. Verglichen mit den bei den Direktreduktionsverfahren üblicherweise verwendeten Schachtöfen gestattet das Fließbett eine schnellere und damit leistungsfähigere Reduktion.

Die beiden fertigreduzierten Fraktionen A und B werden zweckmäßigerweise in einem Einschmelzvergaser zu flüssigem Roheisen erschmolzen, indem sie dem Einschmelzvergaser im Bereich der Sauerstoff-Einblasebene oder oberhalb dieser Ebene im Bereich des Koksbettes zugeführt werden. Durch den hohen Metallisierungsgrad der reduzierten Fraktionen A und B besteht im Einschmelzvergaser ein geringerer Wärmebedarf zur Erzeugung des flüssigen Roheisens.

Enthält die Fraktion B Korngrößen entsprechend einem Durchmesser von maximal 5 mm, so wird diese Fraktion ebenso vorteilhaft durch ein von Reduktionsgas durchströmtes Fließbett geleitet, wonach jener Anteil B1, der Korngrößen entsprechend Durchmesser von unter 2 mm aufweist, abgetrennt wird und der Anteil B2, der Korngrößen entsprechend Durchmessern von mindestens 2 mm aufweist, unter Schwerkrafteinwirkung noch zusätzlich durch ein von Reduktionsgas durchströmtes Festbett geleitet und dabei weiterreduziert wird.

Dadurch ist gewährleistet, daß auch jene Erzteilchen, die einen Durchmesser von mindestens 2 mm und maximal 5 mm aufweisen, einen sehr hohen Metallisierungsgrad erreichen, so daß der reduzierte Anteil B1 dem Einschmelzvergaser im Bereich der Sauerstoff-Einblasebene oder oberhalb dieser Ebene im Bereich des Koksbettes zugeführt werden kann und der reduzierte Anteil B2 dem Einschmelzvergaser oberhalb der Düsenebene zugeführt werden kann, wobei flüssiges Roheisen erschmolzen wird.

Enthält die Fraktion B noch zusätzlich Korngrößen entsprechend einem Durchmesser bis zu 20 mm, vorzugsweise bis zu 10 mm, so wird der Anteil B2, der in diesem Fall Teilchen mit einem Durchmesser von 2 mm bis 20 mm, vorzugsweise 2 mm bis 10 mm, aufweist, zweckmäßigerweise in die Beruhigungszone des Einschmelzvergasers, die sich über dessen Fließbett befindet, eingebracht.

Eine Anlage zur Durchführung des erfindungsgemäßen Verfahrens weist einen Einschmelzvergaser und einen Reduktionszyklon auf, wibei der Reduktionszyklon austragsseitig über eine Transporteinrichtung für reduziertes Eisenerz mit dem unteren Teil des Einschmelzvergasers in Verbindung steht und vom Beruhigungsraum des Einschmelzvergasers eine Reduktionsgasleitung zum Reduktionszyklon führt.

Eine Anlage dieser Art ist aus der DE-B-1 086 256 bekannt. Die Einführungsorgane zur Zuführung des Roherzstaubes sind bei der bekannten Anlage in der Nähe des Abgasauslasses der Schmelzkammer oder sogar in diesem vorgesehen. Hierdurch wird das staubförmige bzw. feinkörnige Eisenerz von dem in der Schmelzkammer aufwärts gerichteten Gasstrom mitgerissen und über eine Leitung in eine Vorreduktionskammer, in der das Erz vorreduziert wird, geführt. Diese Chargierung dient dazu, die Temperatur des Reduktionsgases auf eine zur Reduktion des Erzes dienliche Temperatur abzukühlen.

Aus Patent Abstracts of Japan, Bd. 13, Nr. 42, JP-A-63-241125 ist eine Anlage bekannt, bei der ein Schmelzgefäß über eine einer Vorreduktion dienende Rohrkammer mit einem Gasabscheider verbunden ist. Bei dieser bekannten Anlage erfolgt die Chargierung staubförmigen Erzes am Beginn der das Schmelzgefäß mit dem Gasabscheider verbindenden Rohrkammer, also ebenfalls nahe der im Schmelzgefäß vorgesehenen Gasaustrittsöffnung. Dem Gasabscheider ist noch ein weiterer Gasabscheider nachgeordnet, wobei die in den beiden Gasabscheidern abgeschiedenen Teilchen dem Schmelzgefäß zugeführt werden.

Erfindungsgemäß ist die Anlage gemäß Anspruch 8 aufgebaut. Mit dieser Anlage können Erzgemische unterschiedlicher Korngröße mit Teilchendurchmessern bis zu 20 mm sehr einfach und kostengünstig verarbeitet werden.

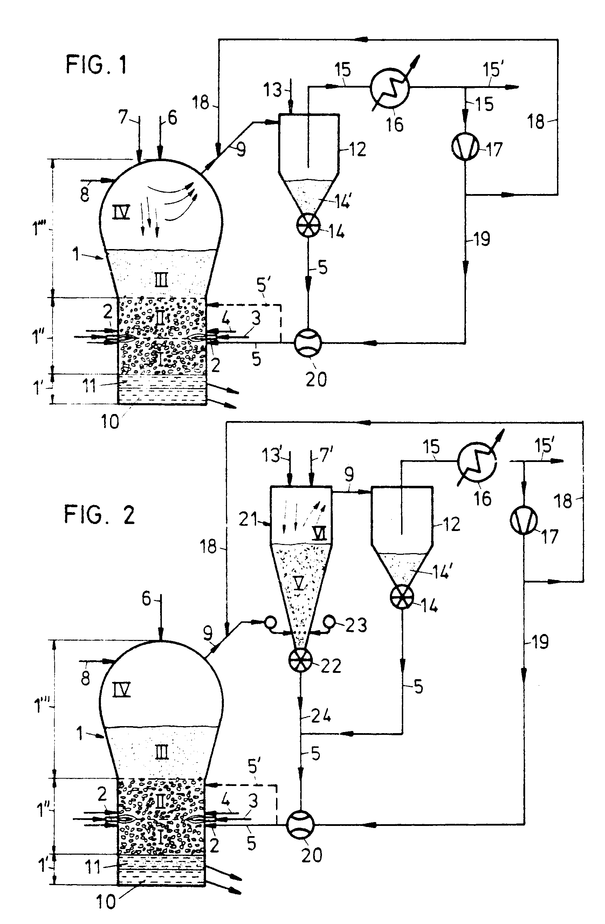

Die Erfindung ist anhand der Zeichnung näher erläutert, wobei die Fig. 1 bis 4 schematisch jeweils besondere Ausführungsformen der erfindungsgemäßen Anlage zeigen.

Mit 1 ist in Fig. 1 ein Einschmelzvergaser bezeichnet, der in der gezeigten Ausführungsform einen unteren Abschnitt 1′, einen mittleren Abschnitt 1˝ und einen erweiterten oberen Abschnitt 1‴ besitzt. Der untere Abschnitt 1′ ist zur Aufnahme des schmelzflüssigen Bades bestimmt. In den mittleren Abschnitt 1˝ münden Düsen 2 (Brenner) mit einer Zuleitung 3 für Sauerstoff. Im unmittelbaren Bereich der Düsenebene münden weiters eine Zuleitung 4 für kohlenstoffhältiges Material und eine Leitung 5 für fertigreduziertes Erz. Diese Leitung 5 kann alternativ auch über der Düsenebene, im Bereich des oberen Koksbettes II in den Einschmelzvergaser 1 münden, wie in Fig. 1 mit der Leitung 5′ strichliert angedeutet ist.

Im oberen erweiterten Bereich 1‴ weist der Einschmelzvergaser 1 Chargiervorrichtungen 6 für stückige Kohle mit Korngrößen entsprechend einem Durchmesser bis zu 40 mm, 7 für Erz und 8 für Zuschlagstoffe auf. Weiters ist im oberen Abschnitt 1‴ eine Reduktionsgasleitung 9 für die Ableitung von im Einschmelzvergaser gebildetem Reduktionsgas vorgesehen.

Im mittleren Abschnitt 1˝ werden aus gröberen Koksteilchen die mit I und II bezeichneten Festbetten (Festbettzonen) gebildet. Das sich darunter ansammelnde Schmelzbad besteht aus dem schmelzflüssigen Metall 10 und Schlacke 11, wobei für beide Komponenten jeweils ein Abstich vorgesehen wird. Das Festbett I weist keine Gaszuführung auf, es ist also nicht durchgast. Darüber wird das Festbett II gebildet, in welchem die Kokspartikel von dem aus der Zuführungsleitung 3 strömenden sauerstoffhältigen Gas unter Bildung von Kohlenmonoxid durchströmt werden. Oberhalb des Festbettes II wird ein Fließbett III gebildet, welches durch das im Festbett II entstehende Reduktionsgas in Bewegung gehalten wird. Kleine Kohle- bzw. Kokspartikel bleiben in der Fließbettzone III. Größere Kohle- bzw. Kokspartikel, für die die Leerrohrgeschwindigkeit des Gasstromes unter dem Lockerungspunkt für ein entsprechendes Partikelbett liegt, werden lediglich abgebremst, fallen durch das Fließbett III und setzen sich unter Bildung des Festbettes II bzw. des Festbettes I ab.

Über dem Fließbett III befindet sich die Beruhigungszone IV, in die u.a. das Eisenerz chargiert wird.

Mit 12 ist ein Reduktionszyklon bezeichnet, in den die Reduktionsgasleitung 9 und eine Chargiervorrichtung 13 für Zuschlagstoffe münden. Am unteren Ende des Reduktionszyklons ist eine Austragseinrichtung 14 für fertigreduziertes Stauberz 14′ vorgesehen, das der Leitung 5 beaufschlagt wird.

Vom oberen Teil des Reduktionszyklons wird von suspendiertem, reduziertem Stauberz befreites Topgas durch die Topgasleitung 15 abgeführt, im Kühler 16 gekühlt, im Kühlgasgebläse 17 verdichtet und entweder über die Rückleitung 18 in die Reduktionsgasleitung 9 zur Kühlung der Gas-Stauberz-Suspension aus dem Einschmelzvergaser 1, oder über die Ableitung 19 mittels des Injektors 20 in die Leitung 5 eingespeist. Über die Zweigleitung 15′ kann Topgas der Anlage auch entnommen und anderen Verwendungszwecken zugeführt werden.

Die in Fig. 1 dargestellte Ausführungsform der erfindungsgemäßen Anlage eignet sich zur Verarbeitung von Eisenfeinerzen mit einer Korngröße entsprechend einem Durchmesser von maximal 0,5 mm, insbesondere aber für Stauberze, wobei die Erzteilchen einen Durchmesser von unter 0,2 mm aufweisen (Fraktion A). Ein derartiges Erz wird in die Beruhigungszone (IV) des Einschmelzvergasers 1, der im oberen Teil der Beruhigungszone (IV) eine Temperatur von etwa 1000°C aufweist, chargiert, wo es vom entgegenströmenden Reduktionsgas, das im unteren Teil des Einschmelzvergasers gebildet wird, vorreduziert wird.

Die vorreduzierte Fraktion A wird vom Reduktionsgas fast vollständig mitgerissen und durch die Reduktionsgasleitung 9 in den Reduktionszyklon 12 eingebracht, wobei die Gas-Stauberz-Suspension zu diesem Zeitpunkt auf eine Temperatur von etwa 800°C gekühlt wird.

Im Reduktionszyklon 12 wird die Fraktion A mit Reduktionsgas fertigreduziert und durch die Zyklonwirkung vom Reduktionsgas abgeschieden. In der Folge wird die fertigreduzierte Fraktion A über die Austragsvorrichtung 14 der Leitung 5 beaufschlagt und mit Topgas direkt in die Schmelzzone des Einschmelzvergasers eingeblasen, u.zw. entweder im Bereich der Sauerstoff-Einblasebene oder darüber, im Bereich des Koksbettes II.

Die in der Beruhigungszone IV des Einschmelzvergasers 1 verbleibende Feinerzfraktion mit einem Teilchendurchmesser von mindstens 0,2 mm (und maximal 0,5 mm) wird in der Beruhigungszone zwar auch vorreduziert, kann aber nicht vom Reduktionsgasstrom ausgetragen werden und gelangt infolge Schwerkrafteinwirkung durch das Fließbett III in das Festbett II bzw. I, wird dabei fertigreduziert und aufgeschmolzen.

Erzfraktionen mit einem Teilchendurchmesser von mehr als 0,5 mm können mit der in Fig. 1 dargestellten Anlage nicht verarbeitet werden, da sie im Einschmelzvergaser nicht mehr befriedigend fertigreduziert werden können.

Die Verarbeitung eines derartigen Erzes gestattet die in Fig. 2 dargestellte Ausführungsform der erfindungsgemäßen Anlage. Sie unterscheidet sich von der Variante gemäß Fig. 1 vor allem dadurch, daß in die Reduktionsgasleitung 9 zwischen dem Einschmelzvergaser 1 und dem Reduktionszyklon 12 ein Reduktionsreaktor 21 zwischengeschaltet ist, der Chargiereinrichtungen 13′ für Zuschlagstoffe und 7′ für das Erz aufweist und eine Austragseinrichtung 22 für fertigreduziertes Feinerz besitzt.

Im Inneren des Reduktionsreaktors 21 wird ein Fließbett V aus Erz mit Reduktionsgas aus dem Einschmelzvergaser 1 aufrecht erhalten, das in der Düsenebene 23 eingeblasen wird, die von der Reduktionsgasleitung 9 gespeist werden. Über dem Fließbett V befindet sich die Beruhigungszone VI. An die Austragseinrichtung 22 schließt eine Leitung 24 für fertigreduziertes Feinerz an, die in die Leitung 5 mündet.

Die übrigen in Fig. 2 ersichtlichen Anlagenteile entsprechen den in Fig. 1 dargestellten und oben beschriebenen.

Die in Fig. 2 dargestellte Ausführungsform der erfindungsgemäßen Anlage eignet sich insbesondere zur Verarbeitung von Feinerzen, die Erzteilchen mit einem Durchmesser bis zu 1 mm aufweisen. Dieses Erz wird mittels der Chargiereinrichtung 7′ in die Beruhigungszone VI des Reduktionsreaktors 21 chargiert und vom entgegenströmenden Reduktionsgas, das im Einschmelzvergaser 1 erzeugt und durch die Reduktionsgasleitung 9 in den unteren Teil des Reduktionsreaktors 21 geblasen wird und dabei das Fließbett V aufrecht erhält, teilweise vorreduziert. Analog den Vorgängen in der Beruhigungszone IV des Einschmelzvergasers 1 gemäß Fig. 1 wird das Reduktionsgas durch die weiterführende Reduktionsgasleitung 9, die vom oberen Teil des Reduktionsreaktors 21 abführt, in den Reduktionszyklon geleitet, wobei es die vorreduzierte Fraktion A mitreißt. Diese wird im Reduktionszyklon 12 fertigreduziert und, wie anhand der Fig. 1 beschrieben, dem Einschmelzvergaser 1 zugeführt.

Die in der Beruhigungszone VI verbleibende vorreduzierte Feinerzfraktion mit Korngrößen entsprechend einem Durchmesser von 0,2 mm bis 1 mm kann vom Reduktionsgas nicht ausgetragen werden und gelangt aufgrund der Schwerkrafteinwirkung durch das Fließbett V, wobei sie fertigreduziert, am unteren Ende des Reduktionsreaktors ausgetragen, der Leitung 5 beaufschlagt und zusammen mit der fertigreduzierten Fraktion A dem Einschmelzvergaser zugeführt wird.

Vorteilhaft ist der Reduktionsreaktor 21 zumindest im unteren Teil konisch ausgebildet, wodurch das Reduktionsgas beim Durchleiten verschiedene Strömungsgeschwindigkeiten aufweist, was die Trennung der beiden Erzfraktionen unterstützt. Trotz der größeren Durchmesser der Teilchen der Fraktion B weisen diese nach Ausbringen aus dem Reduktionsreaktor etwa denselben hohen Metallisierungsgrad auf wie die im Reduktionszyklon 12 fertigreduzierte Fraktion A, weil die größeren Teilchen im Fließbett ausreichend lange mit dem Reduktionsgas in Berührung sind.

Die Verarbeitung von Erzen, die ein noch breiteres Kornband aufweisen, gelingt in einer Anlage, die im wesentlichen analog der in Fig. 2 dargestellten Ausführungsform aufgebaut ist, die aber im Reduktionsreaktor 21 noch zusätzlich ein Festbett VII aus Erz besitzt, das sich unter dem Fließbett V befindet. Zwei derartige Ausführungsformen der erfindungsgemäßen Anlage sind in den Fig. 3 und 4 gezeigt.

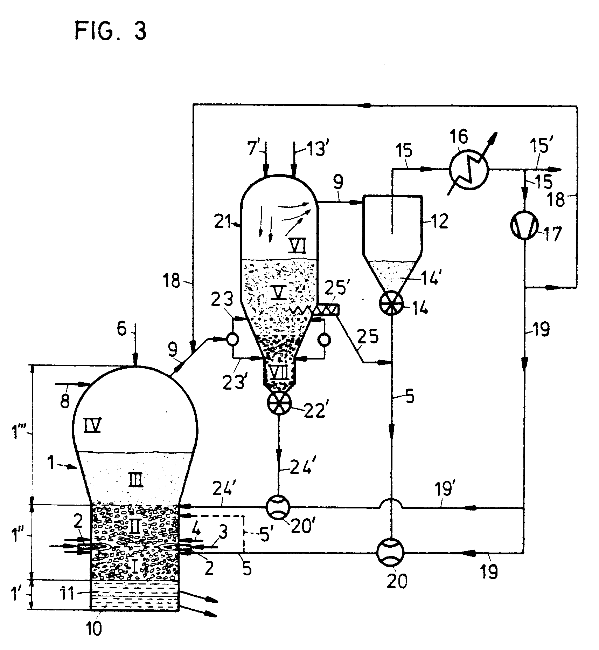

Die Anlage gemäß Fig. 3 eignet sich zur Verarbeitung von Erzen, deren Teilchendurchmesser bis zu 5 mm betragen kann. Sie wird im wesentlichen wie die in Fig. 2 dargestellte Ausführungsform betrieben. Das Erz wird gleichfalls mittels der Chargiereinrichtung 7′ in die Beruhigungszone VI des Reduktionsreaktors 21 eingebracht, worauf die Vorreduktion, die Abtrennung der Fraktion A und deren Fertigreduktion im Reduktionszyklon 12 wie oben beschrieben vorgenommen werden. Die Fraktion B, die im gegenständlichen Fall Erzteilchen mit einem Durchmesser von 0,2 mm bis 5 mm aufweist, gelangt durch das Fließbett V, wobei die Erzteilchen mit einem Durchmesser von weniger als 2 mm im wesentlichen fertigreduziert und daher mittels der Austragsvorrichtung 25′ dem unteren Teil des Fließbettes V entnommen, über die Leitung 25 der Leitung 5 beaufschlagt und zusammen mit der fertigreduzierten Fraktion A - wie oben beschrieben - dem Einschmelzvergaser 1 zugeführt werden können.

Der im Fließbett V verbleibende, vorreduzierte Erzanteil, dessen Teilchen einen Durchmesser von 2 mm bis 5 mm aufweisen, gelangt durch Schwerkrafteinwirkung bis zum Festbett VII und weiter durch dieses hindurch, wobei das Erz weiterreduziert wird. Schließlich wird es mittels der Austragseinrichtung 22′ der Leitung 24′ beaufschlagt und mit Topgas, das der Leitung 19′ entnommen wird, über den Injektor 20′ dem Einschmelzvergaser 1 in den Grenzbereich zwischen dem Fließbett III und dem oberen Festbett II (Reduktionszone des Einschmelzvergasers) eingeblasen und fertigreduziert bzw. Roheisen erschmolzen.

Bei der Verarbeitung von Erzen mit einem breiten Korngrößenband mit Korndurchmessern bis über 1 mm werden an den Reduktionsreaktor hinsichtlich der Erzfraktionierung besondere Anforderungen gestellt. Dementsprechend ist der in Fig. 3 dargestellte Reaktor 21 nicht nur im unteren Teil konisch ausgebildet, es sind auch zwei Einblasebenen 23 und 23′ für das Reduktionsgas vorgesehen, über die die Stärke der Gaszuführung und damit die verschiedenen Steig- und Fallgeschwindigkeiten der Kornfraktionen gesteuert werden können. Es hat sich gezeigt, daß sich für eine optimale Trennwirkung die Grenze zwischen Erz-Festbett VII und Erz-Fließbett V im konischen Bereich, zwischen den beiden Einblasebenen 23 und 23′ einpendelt.

Mittels des in die obere Ebene 23 zugeführten Reduktionsgases wird in erster Linie die Fluidisierung, die Fraktionierung und die Reduktion der kleinen Erzteilchen erzielt, während das über die untere Ebene 23′ zugeführte Reduktionsgas in erster Linie die Grobfraktion des Erzes reduziert.

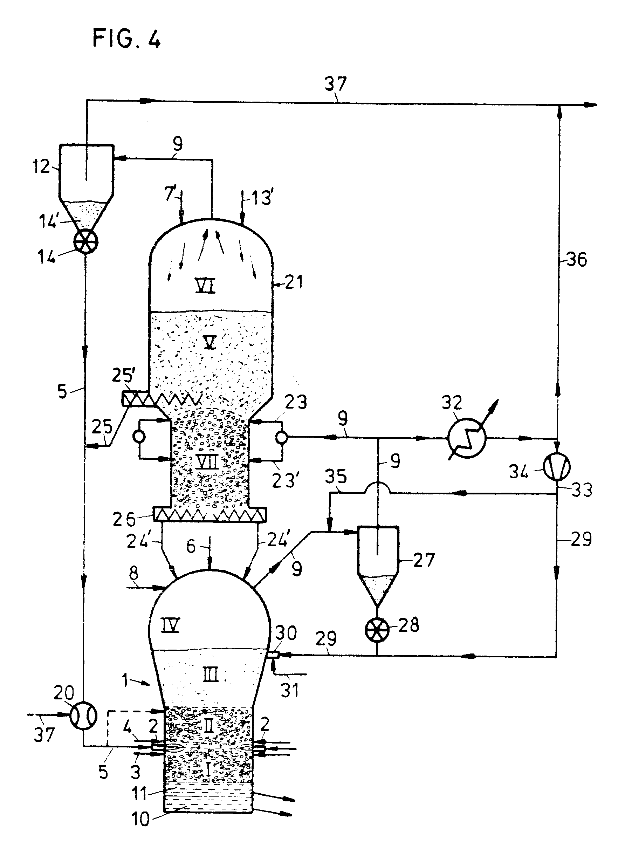

Die Verhüttung eines Erzes mit einem Kornband entsprechend Teilchen mit einem Durchmesser bis zu 20 mm, vorzugsweise bis zu 10 mm, gelingt in einer Anlage gemäß Fig. 4, die im wesentlichen der in Fig. 3 dargestellten Ausführungsform entspricht, bei der aber die Grobfraktion des Erzes (entsprechend Teilchendurchmessern von mehr als 2 mm) mittels der Austragsvorrichtung 26 direkt in die Beruhigungszone IV des Einschmelzvergasers 1 chargiert wird.

In die Reduktionsgasleitung 9, u.zw. zwischen dem Einschmelzvergaser 1 und dem Reduktionsreaktor 21, ist in der in Fig. 4 dargestellten Variante der erfindungsgemäßen Anlage ein Zyklon 27 zur Abscheidung von eventuell mitgerissenem Kohlestaub vorgesehen, der über die Austragseinrichtung 28 der Leitung 29 beaufschlagt und mittels Kühlgas dem Einschmelzvergaser 1 in dessen oberen Bereich des Fließbettes III oder in dessen Beruhigungszone IV eingeblasen wird. Die Einblasdüsen 30 weisen noch eine Zuführung 31 für Sauerstoff auf. Das Kühlgas ist von Kohlestaub befreites Reduktionsgas aus dem Einschmelzvergaser 1, das der Reduktionsgasleitung 9 entnommen, im Kühler 32 gekühlt, über die Kühlgasleitung 33 dem Kühlgasgebläse 34 zugeführt, verdichtet und schließlich der Leitung 29 abgegeben wird. Alternativ kann das Kühlgas auch über die Rückleitung 35 in die Reduktionsgasleitung 9 rückgespeist werden. Zum Einblasen des Kohlestaubes kann statt Kühlgas auch Stickstoff verwendet werden, der an irgendeiner Stelle der Leitung 29 zugeführt werden kann.

Nachdem das Reduktionsgas den Kühler 32 passiert hat, kann es auch über die Leitung 36 der Topgasleitung 37 zugeführt werden.

Die Funktionsweise der in Fig. 4 dargestellten Variante der erfindungsgemäßen Anlage entspricht jener bei Fig. 3 beschriebenen: Das Erz wird in den Reduktionsreaktor 21 chargiert, die Fraktion A mit Reduktionsgas ausgetragen, im Reduktionszyklon 12 fertigreduziert und wie oben beschrieben dem Einschmelzvergaser zugeführt, wobei die fertigreduzierten Fraktionen mit Topgas, Stickstoff oder mit einem anderen inerten Gas eingeblasen werden können. Das in der Beruhigungszone des Reduktionsreaktors 21 verbleibende Erz gelangt unter Schwerkrafteinwirkung in das Erz-Fließbett V, in dem jene Erzteilchen, die einen Durchmesser unter 2 mm aufweisen, praktisch fertigreduziert und aus dem Fließbett V ausgetragen werden. Das restliche Erz gelangt weiter durch das Erz-Festbett VII, das sich in der in Fig. 4 dargestellten Ausführungsform über die obere Einblasebene 23 des Reduktionsgases erstreckt, wird dabei weiterreduziert und anschließend in die Beruhigungszone IV des Einschmelzvergasers 1 chargiert, wo es ein Fließbett III und ein Festbett II bzw. I aus Koks passiert, dabei fertigreduziert und zu Roheisen erschmolzen wird.

Im nachfolgenden Beispiel sind einige typische Kenndaten des erfindungsgemäßen Verfahrens zusammengestellt, die beim Betrieb der erfindungsgemäßen Anlage gemäß Fig. 4 erreicht werden.

### Beispiel:

Analyse der eingesetzen Kohle (die Werte beziehen sich auf wasserfreies Analysengut):

| | |
|---|---|
| C | 81,4 % |
| H | 4,8 % |
| N | 1,4 % |
| O | 5,8 % |
| S | 0,5 % |
| Asche | 6,2 % |
| Fe | 30,9 % (der Asche) |
| Cfix | 62,9 % |

Analyse des verarbeiteten Eisenerzes:

| | |
|---|---|
| Fe | 66,9 % |
| FeO | 0,58 % |
| Fe₂O₃ | 95,0 % |
| CaO | 0,025 % |
| MgO | 0,13 % |
| SiO₂ | 0,6 % |
| Al₂O₃ | 1,31 % |
| MnO | 0,38 % |
| Glühverluste | 1,6 % |

Die Korngrößenverteilung des verarbeiteten Eisenerzes (Seibanalyse):

| | |
|---|---|
| 5 % | 10 mm |
| 10 % | 6,3 - 10 mm |
| 18 % | 3,15 - 6,3 mm |
| 42 % | 1,0 - 3,15 mm |
| 25 % | weniger als 1 mm |

Zur Erzeugung des Reduktionsgases wurden 7 t Kohle/Stunde obiger Zusammensetzung in einer Anlage gemäß Fig. 4 vergast, wozu 580 m³ Sauerstoff/t Roheisen verbraucht wurden. Die Reinheit des Sauerstoffes betrug 95 bis 98 %. Pro Stunde wurden ca. 14.000 m³ Reduktionsgas erhalten, das folgende Zusammensetzung aufwies:

| | |
|---|---|
| CO | 66,2 % |
| CO₂ | 4,5 % |
| N₂ | 0,5 % |
| H₂ | 28,5 % |
| CH₄ | 0,3 % |

Die Leerrohrgeschwindigkeiten im Einschmelzvergaser 1 und im Reduktionsreaktor 21 bewegten sich zwischen 0,3 und 0,5 m/s, wogegen die Leerrohrgeschwindigkeit zwischen den beiden Düsenebenen des Reduktionsreaktors 21 1,5 bis 3 m/s betrug.

Es konnten 12,85 t Eisenerz pro Stunde verarbeitet werden, wobei die Schmelzleistung 8,1 Tonnen Roheisen pro Stunde betrug. Das erhaltene Roheisen wies neben Eisen folgende Bestandteile auf:

| | |
|---|---|
| C | 4 % |
| Si | 0,6 % |
| Phosphor | 0,01 % |
| Mangan | 0,1 % |
| Schwefel | 0,04 % |

## Patentansprüche

1. Verfahren zur Herstellung von flüssigem Roheisen durch Schmelzreduktion von Eisenerzen unterschiedlicher Korngrößen, die eine Fraktion (A) mit Korngrößen, denen Durchmesser von weniger als 0,2 mm entsprechen, enthalten, wobei das Erz mit Reduktionsgas vorreduziert, das vorreduzierte Material fertigreduziert und in einem Einschmelzvergaser (1) zu flüssigem Roheisen erschmolzen wird, dadurch gekennzeichnet, daß die vorreduzierte Erzfraktion (A) durch Windsichten mit dem Reduktionsgas von einer Fraktion (B), die aus Teilchen höherer Korngröße besteht, abgetrennt wird, beide Fraktionen (A und B) getrennt fertigreduziert und der Einschmelzzone des Einschmelzvergasers (1) zugeführt werden.

2. Verfahren nach Anspruch 1, dadurch gekennzeichnet, daß die Fraktion (A) in einem Reduktionszyklon (12) fertigreduziert wird.

3. Verfahren nach Anspruch 1 oder 2, dadurch gekennzeichnet, daß die Fraktion (B) Korngrößen entsprechend Durchmessern von 0,2 mm bis 2 mm aufweist und unter Schwerkrafteinwirkung durch ein von Reduktionsgas durchströmtes Fließbett geleitet und fertigreduziert wird.

4. Verfahren nach einem der Ansprüche 1 bis 3, dadurch gekennzeichnet, daß die fertigreduzierten Fraktionen dem Einschmelzvergaser (1) im Bereich der Sauerstoff-Einblasebene oder oberhalb dieser Ebene im Bereich des Koksbettes (II) zugeführt werden.

5. Verfahren nach einem der Ansprüche 1, 2 und 4, dadurch gekennzeichnet, daß die Fraktion (B) Korngrößen entsprechend Durchmessern von 0,2 mm bis 5 mm aufweist und unter Schwerkrafteinwirkung durch ein von Reduktionsgas durchströmtes Fließbett geleitet wird, wonach jener Anteil (B1), der Korngrößen entsprechend Durchmessern von unter 2 mm aufweist, abgetrennt wird und der Anteil (B2), der Korngrößen entsprechend Durchmessern von mindestens 2 mm aufweist, unter Schwerkrafteinwirkung noch zusätzlich durch ein von Reduktionsgas durchströmtes Festbett geleitet und dabei weiterreduziert wird.

6. Verfahren nach Anspruch 5, dadurch gekennzeichnet, daß der Anteil (B1) nach der Reduktion dem Einschmelzvergaser (1) im Bereich der Sauerstoff-Einblasebene oder oberhalb dieser Ebene im Bereich des Koksbettes (II) zugeführt wird und daß der Anteil (B2) nach der Reduktion dem Einschmelzvergaser oberhalb der Düsenebene zugeführt wird.

7. Verfahren nach Anspruch 6, dadurch gekennzeichnet, daß die Fraktion (B) noch zusätzlich Korngrößen entsprechend einem Durchmesser bis zu 20 mm, vorzugsweise bis zu 10 mm, aufweist, wobei der Anteil (B2) in die Beruhigungszone (IV) des Einschmelzvergasers (1) eingebracht wird.

8. Anlage zur Durchführung des Verfahrens nach einem oder mehreren der Ansprüche 1 bis 7, mit einem Einschmelzvergaser (1) und einem Reduktionszyklon (12), wobei der Reduktionszyklon (12) austragsseitig über eine Transporteinrichtung (5, 5') für reduziertes Eisenerz (14') mit dem unteren Teil des Einschmelzvergasers (1) in Verbindung steht und vom Beruhigungsraum (IV) des Einschmelzvergasers (1) eine Reduktionsgasleitung (9) zum Reduktionszyklon (12) führt, wobei in die Reduktionsgasleitung (9) zwischen Einschmelzvergaser (1) und Reduktionszyklon (12) ein Reduktionsreaktor (21) zwischengeschaltet ist, in den eine Erz-Chargiereinrichtung (7') sowie eine Zuschlagstoff-Chargiereinrichtung (13') direkt münden und der ein vom Reduktionsgas gebildetes Fließbett (V) und gegebenenfalls auch ein Festbett (VII) aufweist und austragsseitig über mindestens eine Transporteinrichtung (24, 5, 24', 25) für reduziertes Eisenerz mit dem Einschmelzvergaser (1) verbunden ist.

## Claims

1. A process for the production of molten pig iron by melt-reducing iron ores of various grain sizes containing a fraction (A) comprised of grain sizes to which diameters of less than 0.2 mm correspond, wherein the ore is pre-reduced with reducing gas, the pre-reduced material is completely reduced and melted to molten pig iron in a melter gasifier (1), characterized in that the pre-reduced ore fraction (A) is separated from a fraction (B) comprised of particles of larger grain sizes by wind-screening by means of the reducing gas, the two fractions (A and B) are completely reduced separately and are supplied to the melting zone of the melter gasifier (1).

2. A process according to claim 1, characterized in that said fraction (A) is completely reduced in a reduction cyclone (12).

3. A process according to claim 1 or 2, characterized in that said fraction (B) comprises grain sizes corresponding to diameters ranging from 0.2 mm to 2 mm and is conducted under the action of gravity through a fluidized bed flowed through by reducing gas and is completely reduced.

4. A process according to any one of claims 1 to 3, characterized in that the completely reduced fractions are supplied to the melter gasifier (1) in the region of the oxygen blow-in plane or above this plane in the region of the coke bed (II).

5. A process according to any one of claims 1, 2 and 4, characterized in that said fraction (B) comprises grain sizes corresponding to diameters ranging from 0.2 mm to 5 mm and, under the action of gravity, is conducted through a fluidized bed flowed through by reducing gas, whereupon that portion (B1) which comprises grain sizes corresponding to diameters of below 2 mm is separated and that portion (B2) which comprises grain sizes corresponding to diameters of at least 2 mm, under the action of gravity, is additionally conducted through a fixed bed flowed through by reducing gas and is further reduced therein.

6. A process according to claim 5, characterized in that said fraction (B1), after reduction, is supplied to the melter gasifier (1) in the region of the oxygen blow-in plane or above this plane in the region of the coke bed (II) and that said fraction (B2), after reduction, is supplied to the melter gasifier above the tuyere plane.

7. A process according to claim 6, characterized in that said fraction (B) additionally comprises grain sizes corresponding to diameters of up to 20 mm, preferably up to 10 mm, said fraction (B2) being introduced into the killing zone (IV) of the melter gasifier (1).

8. An arrangement for carrying out the process according to one or several of claims 1 to 7, comprising a melter gasifier (1) and a reduction cyclone (12), said reduction cyclone (12), on its delivery side, communicating with the lower part of the melter gasifier (1) via a transporting means (5, 5') for reduced iron ore (14') and a reducing-gas duct (9) leading from the killing space (IV) of the melter gasifier (1) to the reduction cyclone (12), wherein a reduction reactor (21) is provided in the reducing-gas duct (9) between the melter gasifier (1) and the reduction cyclone (12), into which reduction reactor an ore charging means (7') as well as an additive charging means (13') directly enter and which comprises a fluidized bed (V) formed by the reducing gas and, if desired, also a fixed bed (VII) and, on its delivery side, is connected with the melter gasifier (1) via at least one transporting means (24, 5, 24', 25).

## Revendications

1. Procédé pour la production de la fonte liquide par fusion-réduction de minerais de fer ayant des granulométries différentes et contenant une fraction (A) comprenant des granulométries correspondant aux diamètres de moins de 0,2 mm, procédé dans lequel le minerai est préréduit au moyen de gaz de réduction, la matière préréduite est complètement réduite et est fusée en fonte liquide dans un gazéificateur de fusion (1), caractérisé en ce que la fraction de minerai préreduite (A) est séparée d'une fraction (B) comprenant des particules d'une granulométrie plus grande par aéro-séparation au moyen du gaz de réduction, les deux fractions (A et B) sont complètement réduites séparément et sont amenées à la zone de fusion dudit gazéificateur de fusion (1).

2. Procédé selon la revendication 1, caractérisé en ce que ladite fraction (A) est complètement réduite dans un cyclone de réduction (12).

3. Procédé selon la revendication 1 ou 2, caractérisé en ce que ladite fraction (B) comprend des granulométries correspondant aux diamètres de 0,2 mm à 2 mm et, sous l'action de la gravité, est conduite à travers d'un lit fluidisé passé par du gaz de réduction et est complètement réduite.

4. Procédé selon l'une quelconque des revendications 1 à 3, caractérisé en ce que les fractions complètement réduites sont amenées au gazéificateur de réduction (1) dans la région du plan d'insufflation d'oxygène ou au-dessus de ce plan dans la région du lit de coke (II).

5. Procédé selon l'une quelconque des revendications 1, 2 et 4, caractérisé en ce que ladite fraction (B) comprend des granulométries correspondant aux diamètres de 0,2 mm à 5 mm et, sous l'action de la gravité, est conduite à travers d'un lit fluidisé passé par du gaz de réduction, après quoi la fraction (B1) comprenant des granulométries correspondant aux diamètres de moins de 2 mm est séparée et la fraction (B2) comprenant des granulométries d'au moins de 2 mm, sous l'action de la gravité, de plus est conduite à travers d'un lit fixe en étant réduite encore.

6. Procédé selon la revendication 5, caractérisé en ce que ladite fraction (B1), après la réduction, est amenée au gazéificateur de fusion (1) dans la région du plan d'insufflation d'oxygène ou au-dessus de ce plan dans la région du lit de coke (II) et en ce que ladite fraction (B2), après la réduction, est amenée au gazéificateur de fusion au-dessus du plan de tuyères.

7. Procédé selon la revendication 6, caractérisé en ce que ladite fraction (B) en outre comprend des granulométries correspondant aux diamètres à 20 mm, de préférence à 10 mm, la fraction (B2) étant introduite dans la zone de calmage (IV) du gazéificateur de fusion (1).

8. Installation pour la mise en oeuvre du procédé selon l'une ou plusieurs des revendications 1 à 7, comportant un gazéificateur de fusion (1) et un cyclone de réduction (12), lequel cyclone de réduction (12), du côté de déversement, communique avec la part inférieure du gazéificateur de fusion (1) par un moyen de transport (5, 5') pour du minerai de fer réduit (14') et un conduit du gaz de réduction (9) conduit du volume de calmage (IV) du gazéificateur de fusion (1) au cyclone de réduction (12), cependant qu'un réacteur de réduction (21) est prévu dans le conduit du gaz de réduction (9) entre le gazéificateur de fusion (1) et le cyclone de réduction (12), réacteur de réduction dans lequel un moyen de chargement de minerai (7') ainsi qu'un moyen de chargement de matières d'addition (13') entrent directement et lequel comprend un lit fluidisé (V) formé par le gaz de réduction et, le cas échéant, aussi un lit fixe (VII) et, du côté de déversement, est rélié au gazéificateur de fusion (1) par au moins un moyen de transport (24, 5, 24', 25) pour du minerai de fer réduit.
